# EUROPÄISCHE PATENTSCHRIFT

(11) **EP 2 655 016 B1**
(45) Veröffentlichungstag und Bekanntmachung des Hinweises auf die Patenterteilung: **08.07.2015**
(21) Anmeldenummer: 11804569.9
(22) Anmeldetag: 22.12.2011
(51) Int. Cl.: B25B 7/12, H01R 43/042

(54) **ZANGE**
PLIERS
PINCE

(30) Priorität: 22.12.2010 DE 102010061497
(43) Veröffentlichungstag der Anmeldung: 30.10.2013
(73) Patentinhaber: Rennsteig Werkzeuge GmbH, 98547 Viernau (DE)
(72) Erfinder: SCHMIDT, Martin, 98574 Schmalkalden (DE); LUTZE, Peter, 29614 Soltau (DE)
(74) Vertreter: Müller, Enno
(86) Internationale Anmeldenummer: PCT/EP2011/073742
(87) Internationale Veröffentlichungsnummer: WO 2012/085179

(56) Entgegenhaltungen:
- WO-A1-2005/043692
- US-A- 5 558 166
- US-A- 6 138 346

## Beschreibung

Die Erfindung betrifft eine Zange, bspw. eine Crimpzange, mit einem Beaufschlagungsteil, etwa zur Bewegung eines beweglichen Zangenschenkels relativ zu einem feststehenden Zangenschenkel wobei das Beaufschlagungsteil motorisch bewegbar ist. Eine Zange gemäß dem einleitenden Teil des Anspruchs 1 ist aus der US 5 558 166 bekannt.

Derartige Zangen, die auch als Servozangen bezeichnet werden können, sind bereits in vielfältiger Hinsicht bekannt geworden. Es wird bspw. auf die US 4 475 374 A1, die US 6 662 620 B1 und die US 5 758 729 A verwiesen.

Ausgehend von dem genannten Stand der Technik beschäftigt sich die Erfindung mit der Aufgabe, eine motorisch angetriebene Zange mit Beaufschlagungsteil so weiterzubilden, dass eine insbesondere handhabungsgünstige Gestaltung gegeben ist.

Eine mögliche Lösung der Aufgabe ist bei einer Zange gegeben, bei welcher eine Längsachse eines zum Antrieb des Beaufschlagungsteils vorgesehenen Elektromotors bei horizontaler Ausrichtung des Motors unterhalb des Beaufschlagungsteils verläuft.

Dadurch, dass der Motor in der genannten Ausrichtung unterhalb des Beaufschlagungsteils verläuft, kann eine vorteilhaft günstige Einwirkung auf das Beaufschlagungsteil erreicht werden. Auch lässt sich durch diese grundsätzliche Anordnung eine Mehrzahl von Zangentypen, welche diese Anordnung aufweisen, bilden. So beispielsweise eine Zange mit zwei Zangenschenkeln wie aber auch eine Zange mit sternförmig auf einen Crimpbereich zu gerichteten Crimpstempel.

Weitere Merkmale der Erfindung sind nachstehend, auch in der Figurenbeschreibung und der Zeichnung, oftmals in ihrer bevorzugten Zuordnung zu dem bereits vorstehend erläuterten Konzept beschrieben bzw. dargestellt.

Ein Griffbereich der Zange verläuft oberhalb und unabhängig von dem Elektromotor. Alternativ kann aber auch der Griffbereich umfassend zu dem Elektromotor vorgesehen sein. Hinsichtlich einer Zange mit zwei Zangenschenkeln ist der bewegliche Zangenschenkel für eine Schließbewegung relativ zu dem feststehenden Zangenschenkel motorisch bewegbar und weiter der bewegliche Zangenschenkel in einem an dem feststehenden Zangenschenkel ausgebildeten Gelenk relativ zu dem feststehenden Zangenschenkel verschwenkbar angelenkt.

Hierbei ist weiter insbesondere bevorzugt, dass der Motor den beweglichen Zangenschenkel maulseitig des Gelenks beaufschlagt.

Der Motor beaufschlagt unmittelbar dort, wo die Kraftentfaltung benötigt wird. Der bewegliche Zangenschenkel benötigt bei einer solchen Ausbildung kein wesentliches Moment - über das Gelenk - zu übertragen. Es ist auch nicht erforderlich, dass der Zangenschenkel sich maulabgewandt über das Gelenk hinaus erstreckt. Insgesamt kann hierdurch eine antriebsmäßig vorteilhafte, kompakte Ausgestaltung der Zange erreicht werden.

Weiterhin kann zwischen dem Griffbereich und dem Elektromotor eine Durchgriffsöffnung ausgebildet ist. Ein Gehäuse des Elektromotors kann eine Begrenzung der Durchgriffsöffnung bilden. Die Durchgriffsöffnung kann eine sehr sichere Handhabung der Zange erreichen lassen.

Alternativ und bevorzugt ist der Griffbereich, bevorzugt auch der Motorbereich, sofern nicht ohnehin zusammenfallend, einseitig frei kragend ausgebildet. Es ergibt sich eine U-Anordnung, wobei die U-Schenkel einerseits den Elektromotor und andererseits zumindest einen Teil der Zangenschenkel und ggf. einen Akkumulator aufnehmen. In dem U-Stegbereich ist das Beaufschlagungsteil angeordnet und das Zangenmaul ausgebildet. Das Zangenmaul öffnet entgegengesetzt zu der U-Öffnung. Im Falle einer Vierdornvercrimpung ist die Vierdornaufnahme ebenfalls in dem U-Steg angeordnet. Sie öffnet jedoch senkrecht zu einer Ebene, in der sich die U-Schenkel und der U-Steg erstrecken.

Weiterhin kann der Griffbereich, hier insbesondere im Falle der Dorn-Vercrimpung, auch zusammenfallend mit dem Bereich des Elektromotors ausgebildet sein. Es liegt dann nur gleichsam ein Schenkel des U- vor. Die U-Anordnung wandelt sich so im Wesentlichen zu einer L-Anordnung.

Weiterhin ist hinsichtlich der Ausbildung der Zange als Crimpzange, aber auch bzgl. einer Zange mit zwei Zangenschenkeln, von denen einer relativ zu dem anderen beweglich ist, bevorzugt, dass das Beaufschlagungsteil über einen Verzahnungsantrieb bewegbar ist. Somit ist eine präzise Bewegung des Beaufschlagungsteils, wobei gleichzeitig hohe Kräfte aufgebracht werden können, vermittels des Elektromotors möglich.

Zum Antrieb des Beaufschlagungsteils wirkt der Elektromotor auf ein Schneckenrad ein. Das Schneckenrad kann einstückig oder starr verbunden mit dem Beaufschlagungsteil ausgebildet sein. Hierzu kann das Beaufschlagungsteil außenseitig, insbesondere wenn es kreisbogenförmig gebildet ist, radial außenseitig, eine erste Verzahnung aufweisen und der Schneckenantrieb eine zweite damit in Eingriff befindliche Verzahnung bilden.

Bevorzugt ist auch, dass eine Längsachse der auf das Schneckenrad einwirkenden Schnecke zusammenfallend mit einer Längsachse des Elektromotors angeordnet ist. Die beiden Teile sind somit fluchtend zueinander ausgerichtet. Es ergibt sich eine kompakte langgestreckt hintereinander befindliche Anordnung.

Weiterhin kann der Griffbereich an einem Rahmenteil ausgebildet sein, an dessen unterem Rahmenabschnitt der Elektromotor hängend befestigt ist. Konstruktiv ist ein solches Rahmenteil damit gleichsam die "Klammer" sowohl für die Befestigung des Elektromotors wie auch die Ausbildung des Griffbereichs.

Weiter bevorzugt kann der Rahmen als Doppelrahmen ausgebildet sein. Dies bevorzugt im Hinblick auf zwei in Horizontalrichtung nebeneinander befindliche und weiter bevorzugt auch geometrisch zumindest annähernd übereinstimmend gebildete Rahmenteile. Eine hohe Stabilität bei rationaler Herstellbarkeit ist erreicht.

Die Ausbildung als Doppelrahmen kann auch auf den Bereich, der das Beaufschlagungsteil aufnimmt bzw. haltert, reduziert ausgebildet sein.

Weiter kann vorgesehen sein, dass in dem Rahmenteil eine Verstellführung für das Beaufschlagungsteil ausgebildet ist. Hiermit kann insbesondere bei einer Ausbildung der Zange als Crimpzange eine Anpassung im Hinblick auf unterschiedliche Crimpvorgänge bspw. erreicht werden.

Der Verstellweg der Verstellführung kann weiterhin bevorzugt veränderbar vorgesehen sein.

Das Beaufschlagungsteil ist verdrehbar angeordnet. Es kann um eine in der genannten Horizontalebene bzw. parallel versetzt hierzu angeordnete Drehachse drehbar vorgesehen sein.

Insbesondere, wenn auch nicht begrenzt hierauf, bzgl. der Ausbildung der Zange mit zwei Zangenschenkeln, ist auch bevorzugt, dass die Beaufschlagung des beweglichen Zangenschenkels mittels eines Kniehebelgetriebes erfolgt. Dies erbringt eine zudem kraftmäßig günstige Ausgestaltung. Die Anlenkung eines ersten Hebels des Kniehebelgetriebes an dem beweglichen Zangenschenkel ist hierbei bevorzugt unmittelbar in Überdeckung zu dem freien Maulbereich der Zange vorgenommen. Weiter ist bevorzugt, dass der andere, zweite Hebel des Kniehebelgetriebes integriert in ein Schneckenrad ausgebildet ist, das von dem Motor, bevorzugt einer mit der Motorwelle, weiter bevorzugt in axialer Verlängerung der Motorwelle, verbundenen Schnecke beaufschlagt ist. Der zweite Hebel bewegt sich nur als Teil des Schneckenrades. Eine unabhängige Bewegung des zweiten Hebels relativ zu dem Schneckenrad ist bei dieser Gestaltung bevorzugt nicht möglich.

Die Anordnung ist weiter bevorzugt derart vorgesehen, dass bei vorgesehenen zwei Zangenschenkeln sich die Zangenschenkel in einem gemeinsamen Griffabschnitt erstrecken. Sowohl der ggf. feststehende wie der ggf. bewegliche Zangenschenkel sind von einem Griffabschnitt überdeckt, weiter bevorzugt darin aufgenommen. Weiter bevorzugt sind der bewegliche Zangenschenkel und der feststehende Zangenschenkel über einen erheblichen Teil ihrer Länge von dem Griffabschnitt umfasst. Dies ist insbesondere dann sinnvoll zu erreichen, wenn die Erstreckung des beweglichen Zangenschenkels vom Gelenk bis zum Maulbereich vergleichsweise lang ist, so dass die Schwenkbewegung des beweglichen Zangenschenkels im Zuge des Öffnens und Schließens vergleichsweise gering ist, also ein Übergriff oder ggf. Umgriff der Hand deshalb auch in Anbetracht des sich bewegenden beweglichen Zangenschenkels ohne Weiteres räumlich möglich ist.

Vergleichsweise lang bedeutet hierbei insbesondere, dass der Zangenschenkel von dem maulseitigen freien Ende bis zu dem Gelenk, in dem er drehbeweglich gelagert ist, eine Abmessung aufweist, die dem Zehn- bis Hundertfachen oder mehr des Maßes der Hubbewegung aus der offenen in die geschlossene Stellung entspricht.

Darüber hinaus ist die Anordnung bevorzugt derart getroffen, dass der Kniehebeltrieb in einer Seitenansicht der Zange, d.h. üblicherweise in Richtung einer Drehachse des Gelenkes, zwischen der Motorwelle, die hier als Schneckenwelle arbeitet, ggf. der Verlängerung der Motorwelle durch die angesprochene Schnecke, und der beweglichen Backe des beweglichen Zangenschenkels angeordnet ist. Der Kniehebeltrieb ist damit insgesamt weit vorne, bezogen auf eine vertikale Überdeckung bei üblicher Handhabung der Zange im Bereich des Maulbereiches der Zange, angeordnet.

Es ist auch bevorzugt, dass das Gelenk sich im Griffbereich befindet. Der Nutzer kann - auch - mit seiner Hand den Bereich, in dem das Gelenk, das den beweglichen Zangenschenkel mit dem feststehenden Zangenschenkel verbindet, angeordnet ist, umgreifen. Hierbei kann das Gelenk auch am maulseitig abgewandten Endbereich des Griffbereiches angeordnet sein. Eine relativ lange Ausbildung der Zangenschenkel erfordert nur eine vergleichsweise geringe Winkelbewegung der Zangenschenkel relativ zueinander beim Öffnen und Schließen.

Bevorzugt erstreckt sich der bewegliche Zangenschenkel maulabgewandt nicht oder nicht wesentlich über das Gelenk hinaus. Weiter bevorzugt nur so weit, dass eine sichere Gelenkverbindung erreichbar ist. Darüber hinaus bevorzugt auch derart, dass sich jenseits der Gelenkachse bei einem Verschwenken des beweglichen Zangenschenkels kein Überstand des insofern freien Endbereiches des gelenkigen Zangenschenkels über den feststehenden Zangenschenkel oder einen diesbezüglichen Rahmenabschnitt ergibt.

Es ist weiter bevorzugt, dass jedenfalls der bewegliche Zangenschenkel, insbesondere das Zangenmaul des beweglichen Zangenschenkels, aus Plattenteilen zusammengesetzt ist und dass die Krafteinleitung des Motors auf den beweglichen Zangenschenkel auf einen die Plattenteile verbindenden Steg erfolgt. Bevorzugt ist der bewegliche Zangenschenkel aus zwei jeweils vollständig oder jedenfalls im Wesentlichen über die gesamte Länge des beweglichen Zangenschenkels sich erstreckende Plattenteile zusammengesetzt.

Im Weiteren ist auch bevorzugt, dass zwischen dem Motor und den Zangenschenkeln, die wie angesprochen bevorzugt gemeinsam von einer Hand übergreifbar ausgebildet sind, in Vertikalrichtung bezogen auf eine horizontale Ausrichtung der Längsachse des Elektromotors, ein Durchgriffsraum ausgebildet ist, durch den die Hand bei der Benutzung hindurchgreifen kann.

Hierzu ist es auch insbesondere bevorzugt, dass der feststehende Zangenschenkel mit einem, vorzugsweise geschlossenen, Rahmenteil verbunden ist oder ein Teil dieses Rahmenteils bildet. An einem ersten Schenkel des Rahmenteils ist bevorzugt das Gelenk ausgebildet und entsprechend der bewegliche und auch der feststehende Zangenschenkel angeordnet. An einem zweiten, sich im Wesentlichen gleichgerichtet zu dem genannten ersten Schenkel erstreckenden Schenkel des Rahmenteils, ist bevorzugt der Motor angebracht. Diese genannten ersten und zweiten Schenkel sind auch bevorzugt Langschenkel gegenüber Kurzschenkeln, welche in Querrichtung zu den Langschenkeln diese miteinander verbinden. Das Rahmenteil ist weiter bevorzugt im Bereich des feststehenden Zangenschenkels, darüber hinaus bevorzugt aber auch insgesamt, aus zwei, bevorzugt gleichen, Plattenteilen zusammengesetzt. Die Plattenteile des Rahmens bzw. des feststehenden Zangenschenkels sind in einer Seitenansicht übereinander angeordnet. Sie können zwischen sich einen Abstandsraum belassen. Insbesondere kann im Bereich des feststehenden Zangenschenkels der bewegliche Zangenschenkel zwischen diesen Plattenteilen aufgenommen sein. Die Verbindung der Plattenteile kann über Verbindungsbolzen realisiert sein.

Die vor- und nachstehend angegebenen Bereiche bzw. Wertebereiche schließen hinsichtlich der Offenbarung auch sämtliche Zwischenwerte ein, insbesondere in 1/10-Schritten der jeweiligen Dimension, ggf. also auch dimensionslos, also bspw. 1/10 mm oder 10 cm etc., einerseits zur Eingrenzung der genannten Bereichsgrenzen von unten und/oder oben, alternativ oder ergänzend aber auch im Hinblick auf die Offenbarung eines oder mehrerer singulärer Werte aus einem jeweiligen Bereich.

Nachstehend ist die Erfindung weiter anhand der beigefügten Zeichnung erläutert, die aber lediglich ein Ausführungsbeispiel darstellt. Hierbei zeigt:
- Fig. 1: eine Seitenansicht der Zange;
- Fig. 2: eine Darstellung gemäß Fig. 1, bei entferntem Gehäuse;
- Fig. 3: eine Darstellung gemäß Fig. 2, jedoch bei geschlossenem Zangenmaul;
- Fig. 4: eine perspektivische Ansicht des Gegenstandes gemäß Fig. 2;
- Fig. 5: eine Seitenansicht der Zange in einer nicht erfindungsgemäßen Ausführung als Crimpzange mit sternförmig zueinander beweglichen Crimpstempeln;
- Fig. 6: eine Darstellung gemäß Fig. 5, bei entfernten Gehäuseteilen;
- Fig. 7: eine perspektivische Darstellung des Gegenstandes gemäß Fig. 6;
- Fig. 8: eine Ansicht von oben auf den Gegenstand gemäß Fig. 6 bzw. Fig. 7;
- Fig. 9: eine Explosionsdarstellung des Gegenstandes gemäß Fig. 6 bzw. Fig. 7;
- Fig. 10: einen Querschnitt durch den Gegenstand gemäß Fig. 6, geschnitten entlang der Linie X - X;
- Fig. 11: einen Querschnitt durch den Gegenstand gemäß Fig. 8, geschnitten entlang der Linie XI - XI;
- Fig. 12: eine Darstellung gemäß Fig. 11, am Ende einer Vercrimpung;
- Fig. 13: eine Darstellung gemäß Fig. 10 bzw. Fig. 11 nach erfolgter Verstellung des Beaufschlagungsteils;
- Fig. 14: eine - teilweise aufgeschnittene - Darstellung einer weiteren Ausführungsform, mit rückseitig offener Griffausbildung; und
- Fig. 15: eine Seitenansicht eines Crimpwerkzeuges in Stab- bzw. L-Ausführung.

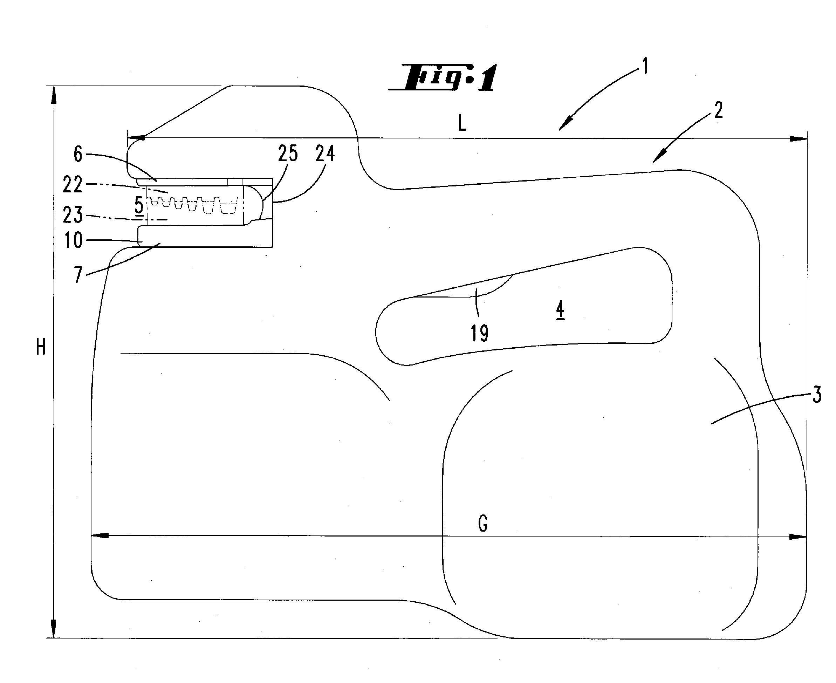

Dargestellt und beschrieben ist zunächst mit Bezug zu den Figuren 1 bis 4 eine Zange 1, die als Crimpzange zum Verpressen von Kabelhülsen oder Kabelverbindern ausgebildet ist. Es handelt sich um ein Handgerät, das bevorzugt einhändig zu führen und zu bedienen ist. Die Zange 1 ist motorisch betreibbar.

Die Zange 1 weist einen Griffbereich 2 auf, der bei üblicher Handhabung oberhalb des in einem unteren Gehäusebereich 3 angeordneten Motors 9 und Getriebes ausgebildet ist. Es ist in dieser Betrachtung eine etagenartige Unterteilung gegeben, wobei in einer oberen Etage sich die Zangenschenkel 6, 7 erstrecken und ein Zangenmaul 5 ausgebildet ist, während in einer unteren Etage, in Erstreckungsrichtung der Zangenschenkel 6, 7 hintereinander angeordnet, der Elektromotor 9 und ein Getriebe, bevorzugt gebildet von einer mit einem Schneckenrad 15 zusammenwirkenden Schnecke 17, angeordnet sind. Eine Durchgriffsöffnung 4 und der Kniehebeltrieb 11 sind gleichsam in einer Zwischenetage angeordnet.

Der Kniehebeltrieb 11 ist bei dieser Ausführungsform als Beaufschlagungsteil anzusehen. Im engeren Sinne ist der Hebel 14 bzw. das Schneckenrad 15, die hier einteilig zusammengefasst ausgebildet sind, das Beaufschlagungsteil, der Hebel 13 kann auch durch eine Kurvenführung an dem beweglichen Zangenschenkel 7 ersetzt sein.

Die Zange 1 kann bevorzugt derart gehandhabt werden, dass sie von einer Hand des Benutzers im Griffbereich 2 umfasst wird und der Motor 9 sich vertikal darunter befindet. Eine Vertikale durch einen Schwerpunkt der Zange 1 verläuft bei dieser Konstellation bevorzugt durch den Griffbereich 2.

Weiterhin kann zum unabhängigen Betrieb der Zange 1 auch noch ein in der Zeichnung nicht dargestellter Akkumulator vorgesehen sein. Der Akkumulator kann axial an den Motor, rückseitig zu der Schnecke angeflanscht oder steckverbindbar sein. Er kann auch in dem - oberen - Griffbereich 2 angeordnet sein.

In vertikaler Richtung zwischen dem Griffbereich 2 und dem Gehäusebereich 3 ist die Durchgriffsöffnung 4 ausgebildet. Das Zangenmaul 5 ist durch freie Endbereiche des feststehenden Zangenschenkels 6 und des beweglichen Zangenschenkels 7 gebildet. Bei Benutzung sind in den freien Endbereichen der Zangenschenkel 6, 7 Crimpeinsätze 22, 23 gehaltert. Das Zangenmaul 5 endet gelenkseitig bereits mit wesentlicher Entfernung zum Gelenk. Bezogen auf eine Gesamtlänge des beweglichen Zangenschenkels endet das Zangenmaul mit einem Abstand von 1/3 bis 9/10 der Länge vor dem Gelenk (Gelenkachse). Das Ende des Zangenmauls 5 ist durch einen das Zangenmaul 5 endseitig kreuzenden Gehäuseabschnitt 24 und/oder einen Vertikalabschnitt 25 des feststehenden und/oder beweglichen Zangenschenkels 6, 7 gegeben.

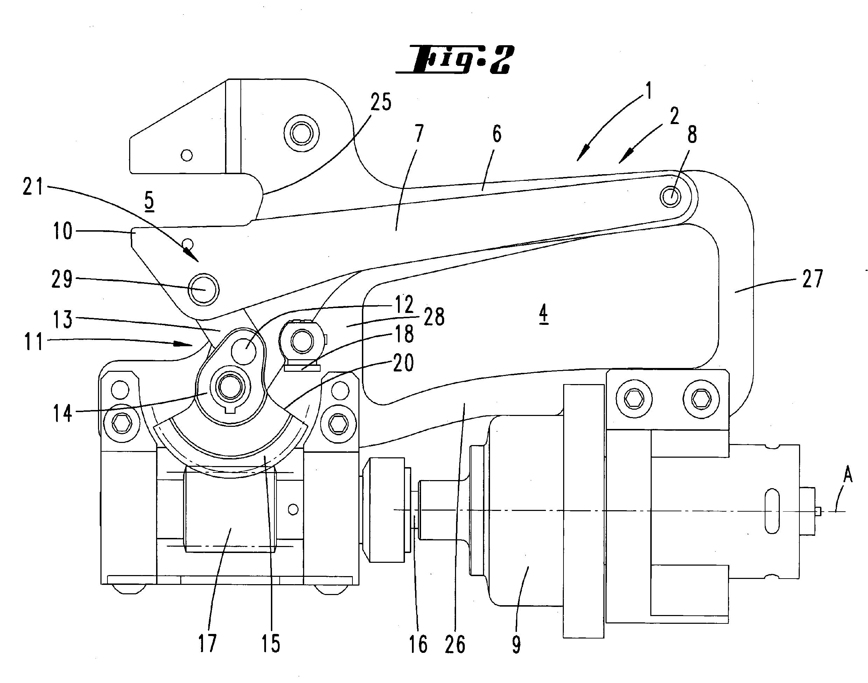

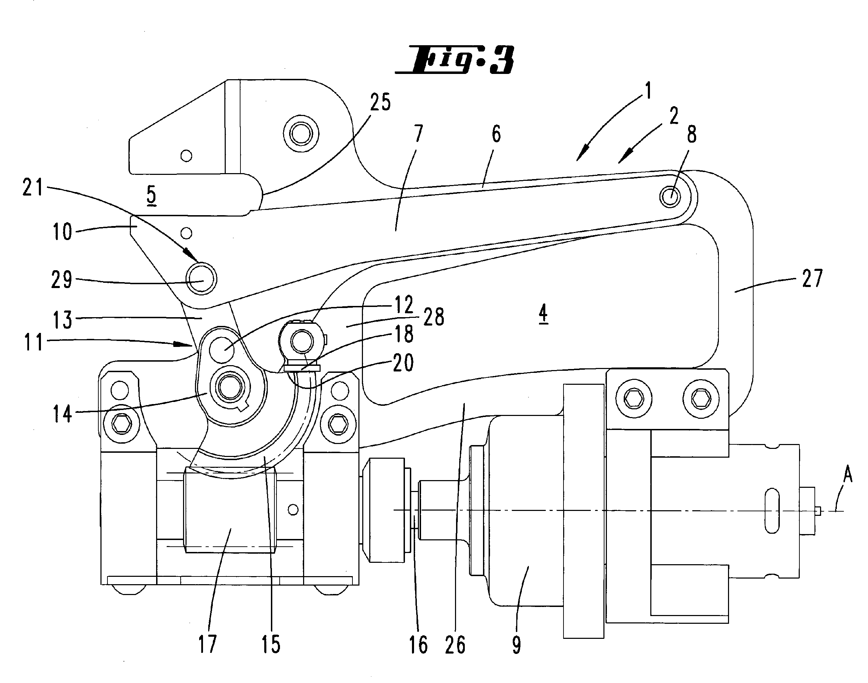

Wie sich weiter aus den Figuren 2 und 3 ergibt, ist der bewegliche Zangenschenkel 7 an dem feststehenden Zangenschenkel 6 mittels eines Gelenkes 8 befestigt. Die Einwirkung des Motors 9 auf den beweglichen Zangenschenkel 7 ist maulseitig des Gelenkes 8 realisiert. Das Gelenk 8 befindet sich im Griffbereich 2. Die Zangenschenkel 6, 7 erstrecken sich auch über einen wesentlichen Teil ihrer Länge innerhalb des Griffbereiches 2. Der wesentliche Teil der Länge bezieht sich auf 1/5 oder mehr bis bspw. hin zu 3/4 der Gesamtlänge der Zangenschenkel.

Der bewegliche Zangenschenkel 7 ist von dem Gelenk 8 bis zu einer maulseitigen Spitze 10 als starr durchgehender Hebel ausgebildet. Im unteren maulseitigen Bereich des beweglichen Zangenschenkels 7, bevorzugt in vertikaler Überdeckung, bezogen bspw. auf die Darstellung in Fig. 2, zu dem Zangenmaul 5, ist der bewegliche Zangenschenkel 7 von dem Kniehebelgetriebe 11 beaufschlagt. Das Kniehebelgetriebe 11 weist ein Kniegelenk 12 und zwei Hebel 13, 14 auf. Der erste Hebel 13, der das Kniegelenk 12 mit dem beweglichen Zangenschenkel 7 verbindet, ist in einem maulseitigen Verbreiterungsbereich 21 des beweglichen Zangenschenkels 7 angelenkt. Der Verbreiterungsbereich 21 stellt eine Verbreiterung der Plattenteile des beweglichen Zangenschenkels 7 in einer Richtung quer zur Gelenkachse dar. Die Dicke der Plattenteile ist bevorzugt über ihre gesamte Erstreckung gleich. Dies betrifft auch bevorzugt die Plattenteile, welche den Rahmen und/oder den feststehenden Zangenschenkel bilden.

Der Hebel 14 ist Teil eines Zahnrades 15, dem Schneckenrad, das von dem Motor 9 angetrieben wird. Zum Antrieb des Zahnrades 15 ist an die Motorwelle 16, in axialer Verlängerung der Motorwelle 16, eine Schnecke 17 angeflanscht, die mit dem Zahnrad bzw. Schneckenrad 15 kämmt. Die Motorwelle 16 ist hier ersichtlich speziell die Schneckenwelle.

Das Schneckenrad 15 ist bevorzugt nur über ein Kreissegment ausgebildet. Weiter bevorzugt ein Kreissegment in einem Winkelbereich von 60° bis 120°.

Die Zange basiert weiter bevorzugt auf einer Rahmenkonstruktion. Insbesondere sind die feststehenden Teile des Zangenmauls und bevorzugt der Motor an Rahmenteilen befestigt oder bilden diese zumindest teilweise selbst. Es kann sich um einen rechteckigen oder eine Rechteckfläche begrenzenden Rahmen handeln. Der Rahmen ist weiter bevorzugt aus einem Flachmaterial gebildet. Die Rahmenteile können auch als Rahmenplatten bezeichnet werden.

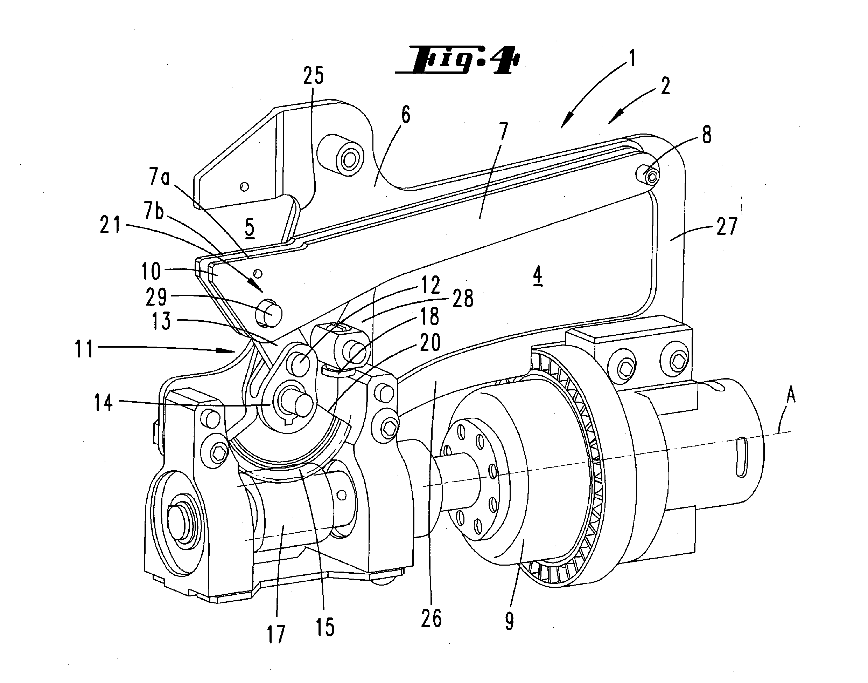

Insbesondere besteht bevorzugt der bewegliche Zangenschenkel 7 aus zwei Plattenteilen 7a und 7b, vgl. bspw. Fig. 4. Es handelt sich hierbei nicht um Plattenteile des Rahmens. Der feststehende Zangenschenkel 6, der Teil des Rahmens sein kann, ist weiter bevorzugt, was im Einzelnen nicht dargestellt ist, ebenfalls zweiteilig ausgebildet. Weiter bevorzugt aus zwei gleichen, in Seitenrichtung, d.h. bspw. senkrecht zur Zeichenebene in Fig. 2, übereinander befindlichen Teilen. Zwischen diesen Teilen des feststehenden Zangenschenkels ist der bewegliche Zangenschenkel angeordnet. Weiter bevorzugt ist der Rahmen insgesamt entsprechend zweiteilig ausgebildet. Die Teile können durch in Richtung der Gelenkachse sich erstreckende Zapfen und/oder bspw. durch Befestigungsschrauben, etwa die den Motor an dem Rahmen haltenden Befestigungsschrauben, weiter mit etwa zwischengelegten Distanzscheiben, verbunden sein. Weiter sind die Plattenteile 7a und 7b durch eine Achse 29 verbunden, an welcher der Hebel 13 des Kniegelenks 12 angreift.

An einem in der Seitenansicht oberen, sich etwa horizontal erstreckenden ersten Schenkel des Rahmens ist das Gelenk 8 ausgebildet. Das Gelenk 8 kann auch an einem umgebenden Gehäuse befestigt sein. Der feststehende Zangenschenkel 6 kann auch zusätzlich vorgesehen sein und an dem ersten Schenkel des Rahmens oder einem umgebenden Gehäuse befestigt sein. An einem unteren, etwa gleichgerichtet zu dem ersten Schenkel verlaufenden zweiten Schenkel 26 des Rahmens ist der Motor 9 und bevorzugt auch das Getriebe einschließlich der Schnecke 17 befestigt. Weiterhin können zwei kürzere dritte und vierte Schenkel 27, 28 vorgesehen sein. Die Schenkel 27, 28 verbinden die ersten und zweiten Schenkel 6, 26 miteinander. Sie belassen, wenn vorgesehen, zwischen sich auch schon die beschriebene Grifföffnung 4. Der vierte, hintere Schenkel 28 erstreckt sich noch in vertikaler Überdeckung zu dem Motor 9. Der vordere, dritte Schenkel 27 erstreckt sich in Richtung auf das Zangenmaul 5 gesehen von dem Motor 9 aus jedoch vor dem Zangenmaul 5.

Der Antrieb mittels des Motors 9 erfolgt hin- und hergehend. Im Zuge des vollständigen Schließens des Zangenmauls 5 fährt eine Flanke 20, vgl. Figuren 2, 3, des Zahnrades 15 gegen den Anschlag 18. Das Erreichen des Anschlags 18 wird, soweit nicht vorher bereits ein Belastungsschwellwert erreicht wurde, als vollständige Durchführung der Vercrimpung gewertet. Die Drehrichtung des Motors 9 wirkt dann umgekehrt und die Zange öffnet wieder.

Während der Durchführung des Crimpvorganges wird die Motorbelastung, geeigneterweise anhand des Motorstromes, messtechnisch erfasst. Eine Leistungsaufnahme des Motors über einen vorgegebenen Belastungsschwellwert führt zum Abschalten des Motors, um Überlastungen zu vermeiden.

Zum Betätigen der Zange bzw. zum Auslösen eines Crimpvorganges ist im Griffbereich 2 ein Schalter 19 vorgesehen. Mittels Betätigung des Schalters 19 wird ein bspw. Crimpvorgang ausgelöst. Der Nutzer muss den Schalter 19 zur Durchführung des Crimpvorganges nach einer insoweit ersten Ausführungsform ständig gedrückt halten. Ein Loslassen des Schalters 19 führt zum Stillstand. In einer zweiten Ausführungsform ist vorgesehen, dass ab Erreichen einer bestimmten Schließstellung selbsttätig die vollständige Schließung erfolgt. Die bestimmte Schließstellung kann bezogen auf einen maximalen Schließhub bei 60 bis 95 % des Schließhubes eingestellt sein. 100 % Schließhub entspricht der vollständig geschlossenen Stellung.

Die Größe der Zange, einschließlich Gehäuse, gemäß Fig. 1, in Erstreckungsrichtung der Zangenschenkel 6, 7, ist maßgeblich an einer Länge L des beweglichen Zangenschenkels orientiert (gemessen vom freien Ende bis zur Achse des Gelenkes 8). Eine in dieser Erstreckungsrichtung gemessene Gesamtlänge G entspricht bevorzugt dem 1,1- bis 1,9-Fachen der Länge L. Eine quer hierzu gemessene Höhe H entspricht bevorzugt der Länge L oder ist kleiner, beträgt bspw. nur ein 0,6-Faches bis 0,9-Faches der Länge L.

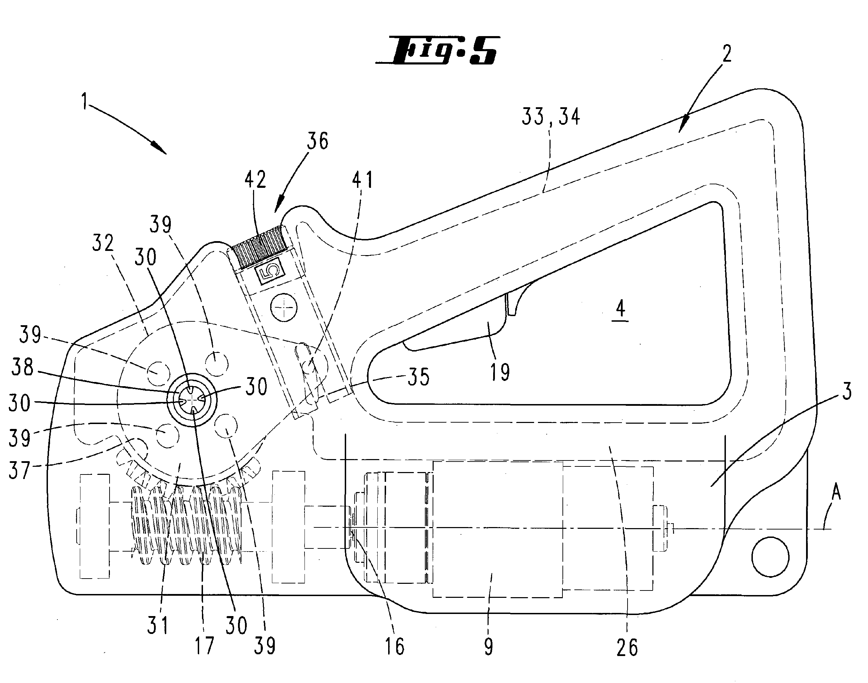

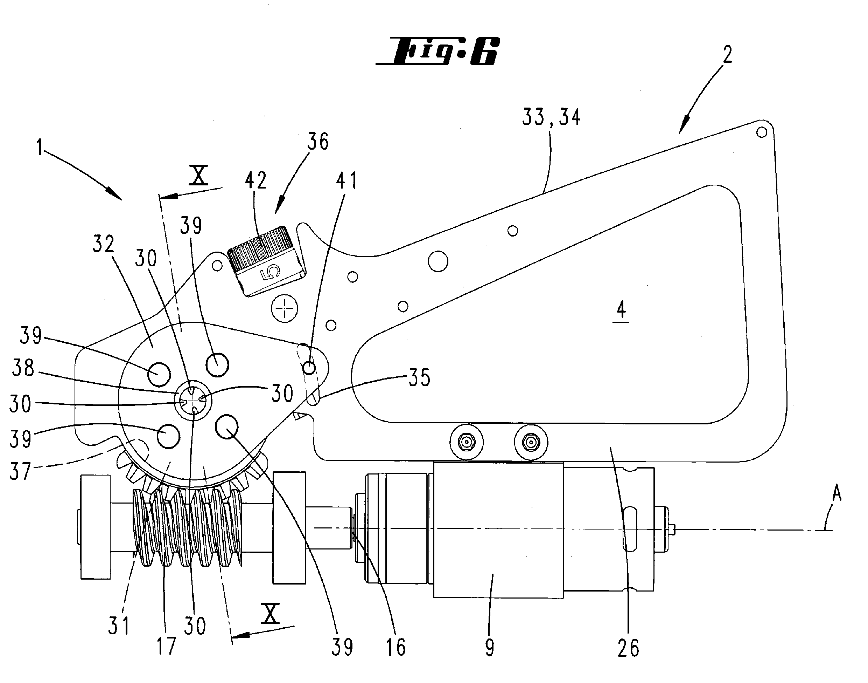

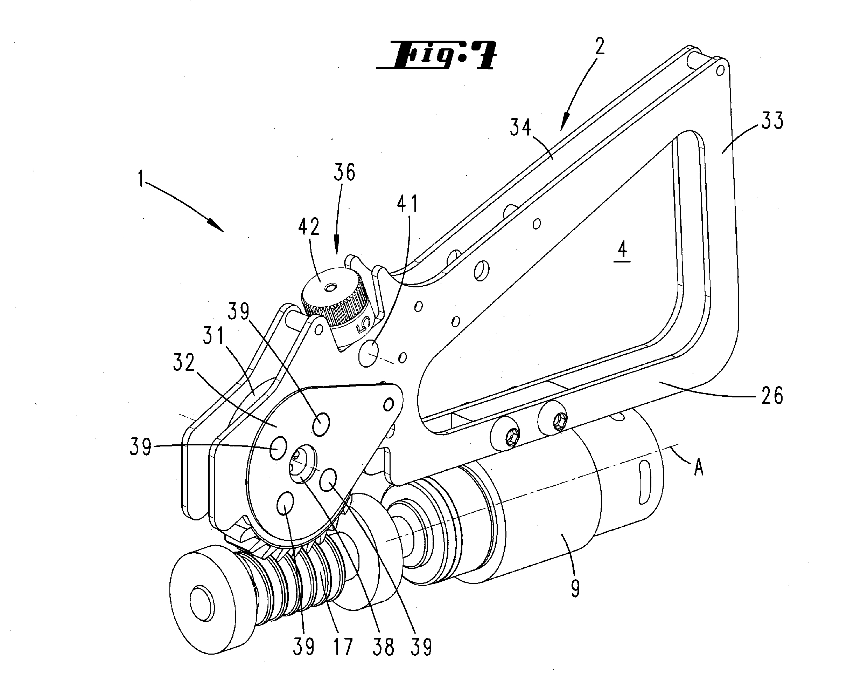

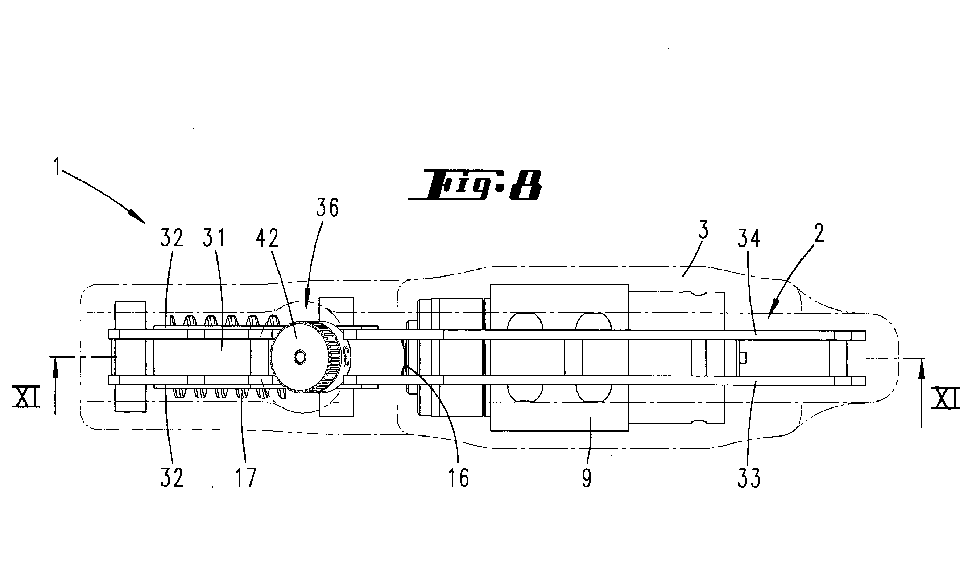

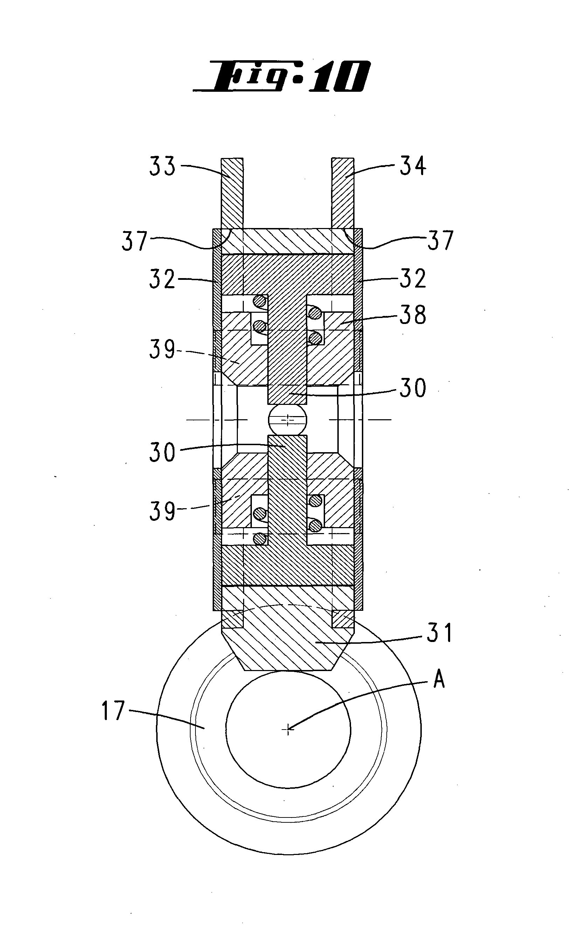

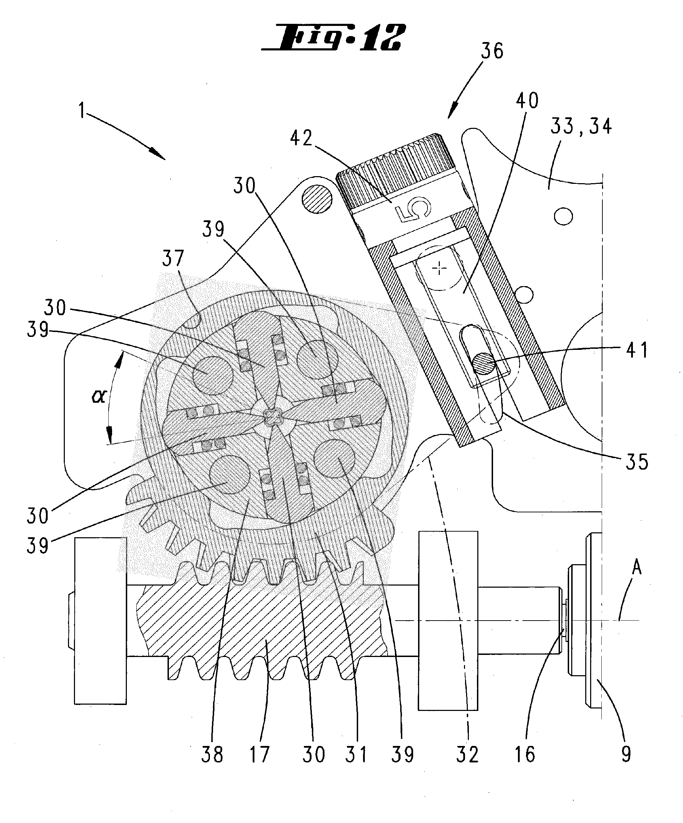

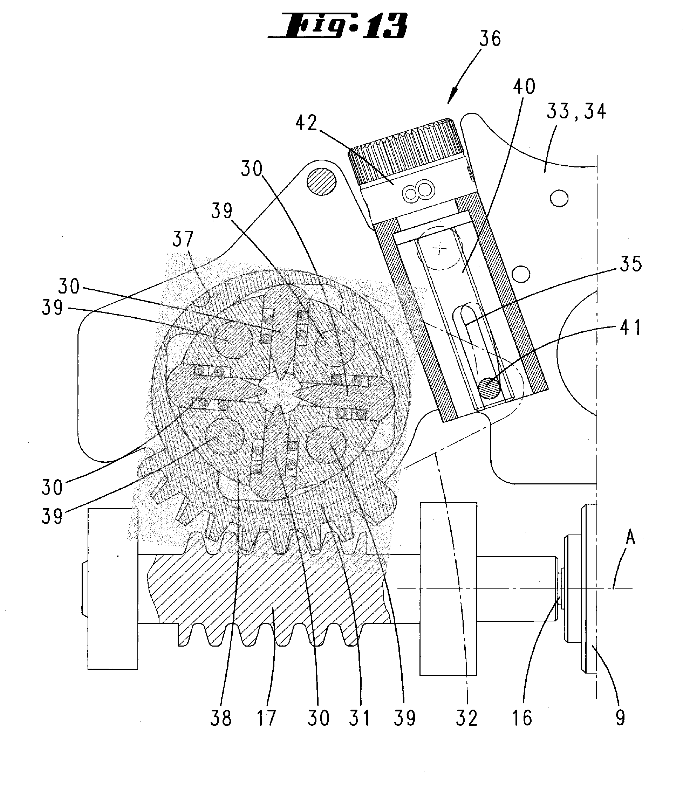

Mit Bezug zu den Figuren 5 bis 13 ist eine zweite nicht erfindungsgemäße Ausführungsform der Zange dargestellt.

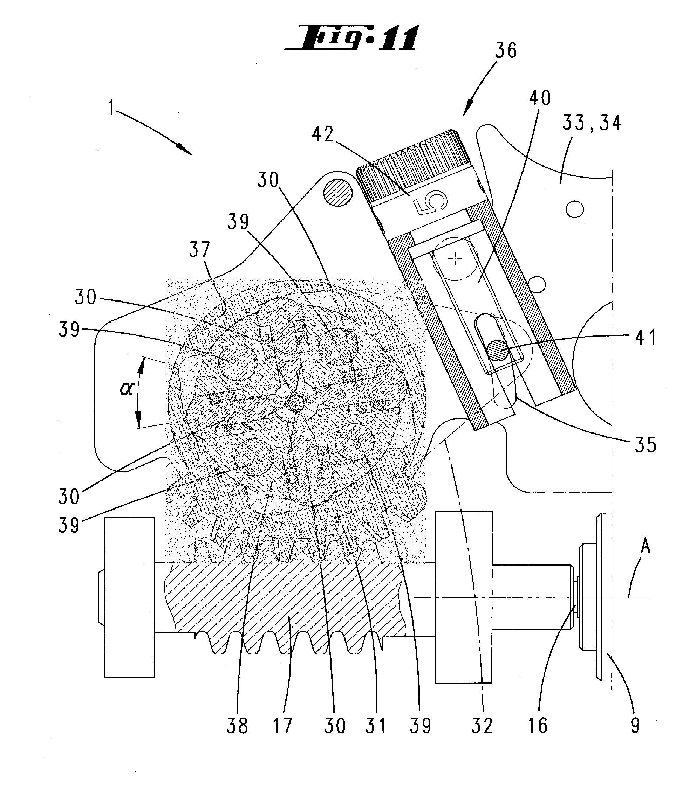

Es handelt sich um eine Zange 1, die, siehe etwa Fig. 11, eine Mehrzahl von Crimpstempeln 30, beim Ausführungsbeispiel vier Crimpstempel 30, aufweist, die sternförmig aufeinander zu gerichtet angeordnet sind. Die Crimpstempel 30 werden bei der Zange 1 dieser Ausführungsform mittels des Beaufschlagungsteils 31 zu einer Crimpbewegung angetrieben. Das Beaufschlagungsteil 31 ist an einem beweglichen Rahmenführungsteil 32 befestigt. Im Einzelnen besteht das Rahmenführungsteil 32 aus zwei jeweils auf einer Flachseite des Beaufschlagungsteils angeordneten Flachteilen. Der auch bei dieser Ausführungsform vorgesehene Elektromotor 9 weist auch hier eine Längsachse A auf, die unterhalb des Beaufschlagungsteils 31 verläuft. Der Griffbereich 2 ist auch bei dieser Ausführungsform oberhalb und unabhängig von dem Elektromotor 9 verlaufend ausgebildet.

Zwischen dem Elektromotor 9 und dem Griffbereich 2 verbleibt auch bei dieser Ausführungsform eine Durchgriffsöffnung 4.

Der Elektromotor 9 ist auch bei dieser Ausführungsform mit einem Schneckenrad 17 gekoppelt, das koaxial zu einer Antriebswelle des Elektromotors 9 angeordnet ist und von der Antriebswelle angetrieben ist. Eine Längsachse des Schneckenrades 17 fällt mit der Längsachse A des Elektromotors 9 zusammen.

Wie auch bei der ersten Ausführungsform gegeben, sind auch bei dieser Ausführungsform Rahmenteile 33 bzw. 34, gegebenenfalls einen geschlossenen Rahmen ergebende Rahmenteile, vorgesehen, wobei ein Rahmenteil 33 oder 34 grundsätzlich ausreichend ist. Die Rahmenteile 33, 34 sind in gleichem Sinne nebeneinander angeordnet wie zu der ersten Ausführungsform beschrieben.

An den Rahmenteilen 33, 34 ist oberseitig der Griffbereich 2 ausgebildet bzw. hierzu genutzt und an dem unteren Schenkel 26 eines Rahmenteils 33, 34 ist der Motor 9 hängend befestigt.

Das Rahmenführungsteil 32 ist in einem oder bevorzugt beiden Rahmenteilen 33, 34 drehbeweglich aufgenommen. Über eine Verstellführung 35 ist das Rahmenführungsteil 32 relativ zu den Rahmenteilen 33, 34 drehbewegbar. Die Verstellführung 35 ist durch ein Einstellteil 36, bevorzugt von Hand, verstellbar.

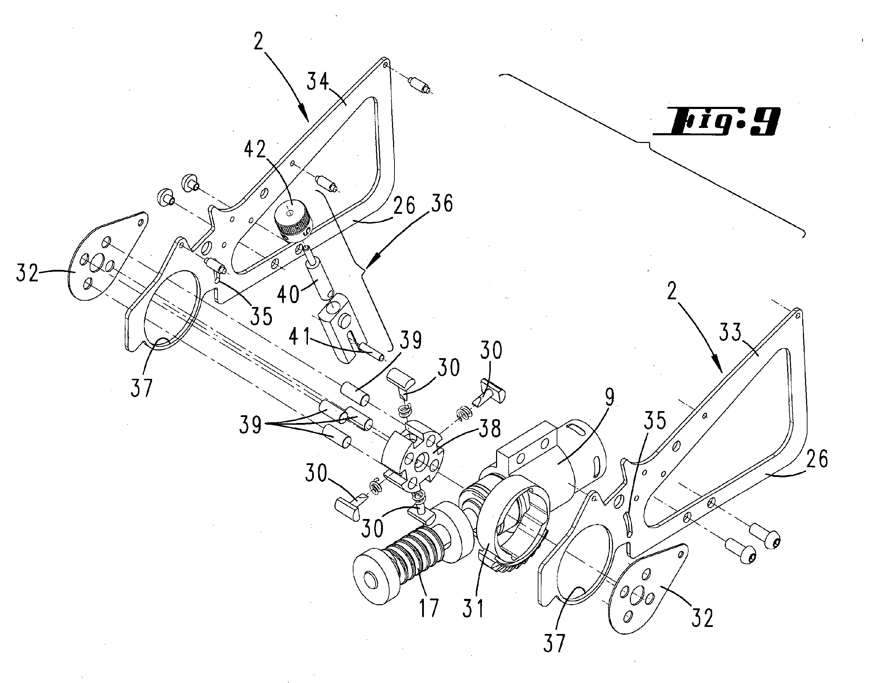

Mit Bezug zu Fig. 9 ist in weiterer Einzelheit von Bedeutung, dass in den Rahmenteilen 33, 34 maulseitig jeweils eine kreisförmige Öffnung 37 ausgebildet ist. In dieser kreisförmigen Öffnung ist das Beaufschlagungsteil 31 drehbeweglich aufgenommen.

Innerhalb des Beaufschlagungsteils 31 ist weiter ein Stempelführungsteil 38 aufgenommen, in welchem die Crimpstempel 30 im Einzelnen gehaltert sind. Das Stempelführungsteil 38 ist mittels Befestigungsbolzen 39 an den Rahmenführungsteilen 32 befestigt. Hierdurch kann das Stempelführungsteil 38 drehbewegt werden, um den Mittelpunkt, in welchem sich die Längsachsen der Crimpstempel 30 schneiden.

Sowohl das Beaufschlagungsteil 31 wie auch das Stempelführungsteil 38 sind damit relativ zu den Rahmenteilen 33, 34 drehbeweglich, um dieselbe genannte Drehachse und unabhängig voneinander.

Bevorzugt ist der mögliche Drehwinkel des Stempelführungsteils 38 geringer als der des Beaufschlagungsteils 31.

Die Verdrehung des Stempelführungsteils 38 wird im Einzelnen durch ein Verschiebeteil 40 erreicht, das mit dem Rahmenführungsteil 32 fest verbunden ist, nämlich beim Ausführungsbeispiel durch einen Verbindungsbolzen 41. Über ein bezogen auf eine Bewegungsrichtung des Verschiebeteils 40 feststehendes Einstellrad 42, das bspw. über ein am zugeordneten Ende des Verschiebeteils 40 ausgebildetes Außengewinde mit einem Innengewinde auf dieses einwirken kann, kann das Verschiebeteil 40 weniger bewegt werden. Diese Bewegung wird über die Kopplung mit dem Rahmenführungsteil 32 in eine entsprechende Kreisbewegung des Stempelführungsteils 38 umgesetzt.

In Fig. 9 sind im Weiteren auch die Befestigungsmittel zwischen den Rahmenteilen 33, 34 dargestellt.

Das Stempelführungsteil 38 ist, wie in Fig. 11 dargestellt, um einen Winkel α insgesamt verstellbar, der bevorzugt zwischen 5° und 15° gegeben ist.

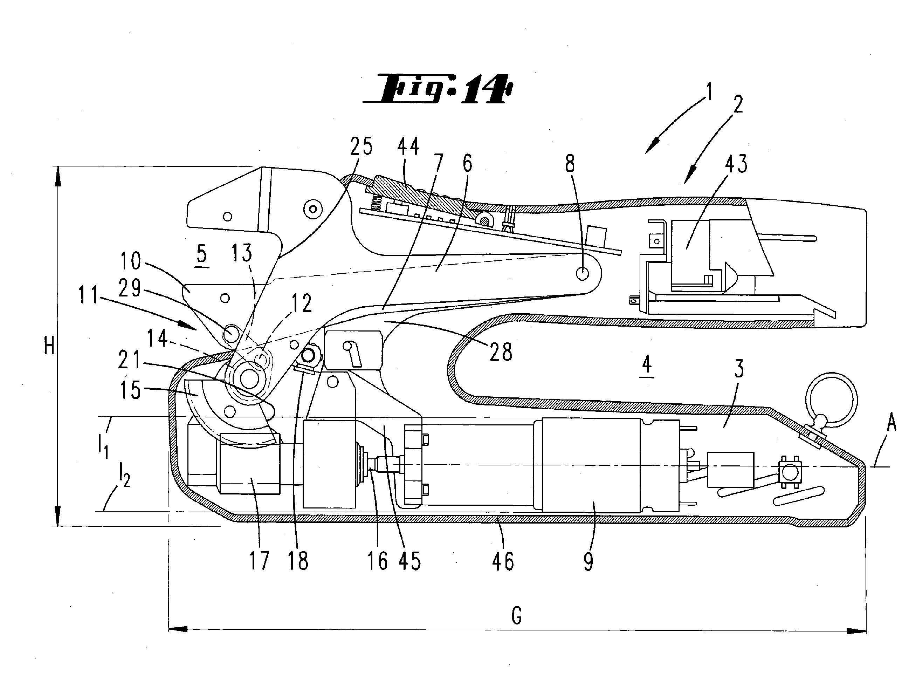

In Fig. 14 ist in teilweiser Aufbruchansicht eine weitere Ausführungsform der Zange gemäß den Figuren 1 bis 4 dargestellt.

Bei der Ausführungsform der Fig. 14 ist zunächst von Bedeutung, dass in dem oberen Griffbereich 2 auch ein Akkumulator 43 angeordnet ist. Dieser ist maulabgewandt rückseitig zu dem Gelenk 8 angeordnet. Weiter ist von Bedeutung, auch unabhängig von der Anordnung des Akkumulators 43, dass der Griffbereich 2 freikragend ausgebildet ist. Es gibt endseitig des Griffbereiches 2 keine Vertikalverbindung zu dem unteren Rahmenteil.

Ein Betätigungsschalter, der bevorzugt, wie dargestellt, als Druckschalter 44 ausgebildet ist, ist maulseitig bezüglich des Gelenks 8 und weiter bevorzugt oberseitig am Griffbereich 2 ausgebildet.

Der feststehende Zangenschenkel 6 ist mit dem Schenkel 28 des Rahmens verbunden oder alternativ einstückig hiermit ausgebildet. Der Schenkel 28 ist einer der hier gegenüber der Ausführungsform der Fig. 1 bis 4 verbliebenen Schenkel. Der Schenkel 27 ist bei dieser Ausführungsform nicht verwirklicht. Der Schenkel 6 nur zum Teil, bis zu dem Gelenk 8. Der Schenkel 26 kann entsprechend der Ausführungsform der Fig. 1 bis 3 verwirklicht sein. Er ist jedoch konkret und bevorzugt nur in Form des Halterungsabschnitts 45 vorgesehen. Der Schenkel 28 setzt sich in den Halterungsabschnitt 45 fort, der im Wesentlichen quer zu einer Längserstreckung der Längsachse A verläuft. Der Halterungsabschnitt 45 erstreckt sich weiter bevorzugt im vorderseitigen, d. h. zangenmaulzugewandten, Endbereich des Elektromotors bzw. eines daran noch angeflanschten Getriebes. Jedoch in diesem Sinne vor der Schnecke 17. Der Halterungsabschnitt 45 haltert das Getriebe und/oder den Motor 9.

Bezogen auf eine Projektion des Elektromotors 9 in Horizontalrichtung, siehe Projektionsbegrenzungslinien l₁ und l₂ ist das Beaufschlagungsteil 15 bzw. gegebenenfalls konkret das Schneckenrad 15, so angeordnet, dass es in diesen Projektionsbereich (von oben) hineinragt Dies betrifft alle hier beschriebenen Ausführungsformen. Es durchsetzt diesen Projektionsbereich jedoch nicht.

Im Weiteren wird auch zu der Ausführungsform der Fig. 14 auf die Ausführungen zu der Ausführungsform der Fig. 1 bis 4 Bezug genommen. Dort beschriebene weitere Einzelheiten sind auch bei dieser Ausführungsform oder können auch bei dieser Ausführungsform verwirklicht sein.

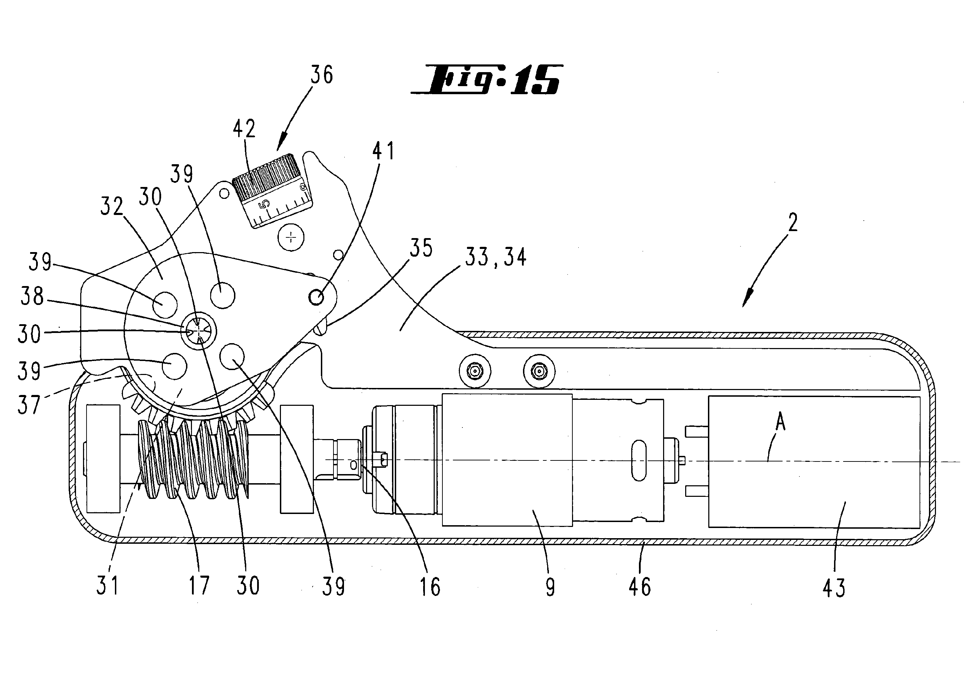

Die Ausführungsform der Fig. 15 betrifft eine nicht erfindungsgemäße Ausbildung der Zange mit Crimpdornen, entsprechend der Ausführungsform der Fig. 5 bis 13.

Der Akkumulator 43 ist hier axial hinter dem Motor 9 angeordnet. Ergänzend oder unabhängig hiervon ist von Bedeutung, dass der Griffbereich den Elektromotor 9 und/oder den Akkumulator 43 umfassend ausgebildet ist. Das Gerät insgesamt ist stabförmig ausgebildet, mit einer maulseitigen Auskragung.

Die Auskragung, die auch insgesamt zu einer L-förmigen Kontur des Gerätes führt, wird im Einzelnen durch Rahmenteile 33, es können auch hier Doppelrahmenteile, also 33, 34, vorgesehen sein, gebildet. Diese Rahmenteile sind jedoch gegenüber den Rahmenteilen der Ausführungsform der Fig. 5 bis 13 verkürzt ausgebildet. Sie bilden insbesondere keinen oberen Griffbereich aus, da, wie ausgeführt, der Griffbereich hier den Elektromotor 9 bzw. den Akkumulator 43 umgebend vorgesehen ist.

Zudem ist, wie auch bei der Ausführungsform der Fig. 14, ein insgesamt umschließendes Gehäuse 46 vorgesehen. Bei den Ausführungsformen der Fig. 14 und 15 kann der Motor 9 ergänzend oder allein durch das Gehäuse 46 gehaltert sein.

Im Übrigen ist ersichtlich eine Ausbildung übereinstimmend mit dem bezogen auf die Fig. 5 bis 13 beschriebenen Gerät gegeben, so dass insofern auch auf diese Ausführungen hier vollinhaltlich Bezug genommen ist.

### Bezugszeichenliste

- 1: Zange
- 2: Griffbereich
- 3: Gehäusebereich
- 4: Durchgriffsöffnung
- 5: Zangenmaul
- 6: Zangenschenkel
- 7: Zangenschenkel 7a Plattenteil 7b Plattenteil
- 8: Gelenk
- 9: Motor
- 10: Spitze
- 11: Kniehebelgetriebe
- 12: Kniegelenk
- 13: Hebel
- 14: Hebel
- 15: Schneckenrad
- 16: Motorwelle
- 17: Schnecke
- 18: Anschlag
- 19: Schalter
- 20: Flanke
- 21: Verbreiterungsbereich
- 22: Crimpeinsatz
- 23: Crimpeinsatz
- 24: Gehäuseabschnitt
- 25: Vertikalabschnitt
- 26: Schenkel
- 27: vordere dritte Schenkel
- 28: vierte hintere Schenkel
- 29: Achse
- 30: Crimpstempel
- 31: Beaufschlagungsteil
- 32: Rahmenführungsteil
- 33: Rahmenteil
- 34: Rahmenteil
- 35: Verstellführung
- 36: Einstellteil
- 37: Öffnung
- 38: Stempelführungsteil
- 39: Befestigungsbolzen
- 40: Verschiebeteil
- 41: Verbindungsbolzen
- 42: Einstellrad
- 43: Akkumulator
- 44: Schiebeschalter
- 45: Halterungsabschnitt
- 46: Gehäuse

- A: Längsachse
- L: Länge
- l₁: Projektionslinie
- l₂: Projektionslinie
- G: Gesamtlänge
- H: Höhe

## Patentansprüche

1. Zange (1), bspw. Crimpzange, mit einem Beaufschlagungsteil, einem beweglichen Zangenschenkel (7) und einem feststehenden Zangenschenkel (6), wobei weiter das Beaufschlagungsteil zur Bewegung des beweglichen Zangenschenkels (7) relativ zu dem feststehenden Zangenschenkel (6) motorisch bewegbar ist, wobei eine Längsachse (L) eines zum Antrieb des Beaufschlagungsteils vorgesehen Elektromotors (9) bei horizontaler Ausrichtung des Motors unterhalb des Beaufschlagungsteils verläuft, wobei das Beaufschlagungsteil verdrehbar angeordnet ist, **dadurch gekennzeichnet dass** ein Griffbereich (2) der Zange (1) oberhalb und unabhängig von dem Elektromotor (9) verläuft, und dass zum Antrieb des Beaufschlagungsteils der Elektromotor (9) über eine Schnecke (17) auf ein Schneckenrad (15) einwirkt, wobei eine Längsachse der Schnecke (17) zusammenfallend mit der Längsachse (L) des Elektromotors (9) angeordnet ist.

2. Zange, bspw. Crimpzange nach einem der vorhergehenden Ansprüche, **dadurch gekennzeichnet, dass** zwischen dem Griffbereich (2) und dem Elektromotor (9) eine Durchgriffsöffnung (4) ausgebildet ist.

3. Zange, bspw. Crimpzange nach Anspruch 2, **dadurch gekennzeichnet, dass** die Durchgriffsöffnung (4) einseitig offen ist.

4. Zange bspw. Crimpzange nach einem der vorhergehenden Ansprüche, **dadurch gekennzeichnet, dass** der bewegliche Zangenschenkel (7) in einem an dem feststehenden Zangenschenkel (6) ausgebildeten Gelenk (8) relativ zu dem feststehenden Zangenschenkel (6) verschwenkbar angelenkt ist.

5. Zange bspw. Crimpzange nach einem der vorhergehenden Ansprüche, **dadurch gekennzeichnet, dass** der Motor (9) an einem mit dem feststehenden Zangenschenkel (6) fest verbundenen Teil angebracht ist.

6. Zange bspw. Crimpzange nach einem der vorhergehenden Ansprüche, **dadurch gekennzeichnet, dass** der Motor (9) den beweglichen Zangenschenkel (7) maulseitig des Gelenks (8) beaufschlagt.

7. Zange bspw. Crimpzange nach einem der vorhergehenden Ansprüche, **dadurch gekennzeichnet, dass** sich die Zangenschenkel (6, 7) in einem gemeinsamen Griffabschnitt erstrecken.

8. Zange bspw. Crimpzange nach einem der Ansprüche 4 bis 7, **dadurch gekennzeichnet, dass** das Gelenk (8) sich im Griffbereich (2) befindet.

9. Zange bspw. Crimpzange nach einem der vorhergehenden Ansprüche, **dadurch gekennzeichnet, dass** die Beaufschlagung mittels eines Kniehebeltriebes (11) erfolgt.

10. Zange bspw. Crimpzange nach Anspruch 9, **dadurch gekennzeichnet, dass** der Kniehebeltrieb (11) in einer Seitenansicht der Zange (1) zwischen der Motorwelle (16) und dem beweglichen Zangenschenkel (7) angeordnet ist.

11. Zange bspw. Crimpzange nach einem der Ansprüche 9 oder 10, **dadurch gekennzeichnet, dass** der Motor (9) auf ein Zahnrad (15) einwirkt, welches zugleich einen Hebel des Kniehebels bildet.

12. Zange bspw. Crimpzange nach einem der vorhergehenden Ansprüche, **dadurch gekennzeichnet, dass** eine Zangenbacke, bevorzugt der gesamte bewegliche Zangenschenkel (7), aus Plattenteilen (7a, 7b) zusammengesetzt ist und die Krafteinleitung des Motors (9) auf den beweglichen Zangenschenkel (7) auf einen die Platten verbindenden Steg erfolgt.

13. Zange bspw. Crimpzange nach einem der Ansprüche 4 bis 12, **dadurch gekennzeichnet, dass** der Motor (9) bezogen auf eine Horizontalausrichtung der Zangenschenkel (6, 7) unterhalb der Zangenschenkel (6, 7) angeordnet ist und sich zumindest teilweise maulseitig relativ zu dem Gelenk (8) erstreckt.

14. Zange bspw. Crimpzange nach einem der vorhergehenden Ansprüche, **dadurch gekennzeichnet, dass** zwischen dem Motor (9) und den Zangenschenkeln (6, 7) ein Durchgriffsraum (4) zur Hand-Halterung der Zange ausgebildet ist.

15. Zange bspw. Crimpzange nach einem der vorhergehenden Ansprüche, **dadurch gekennzeichnet, dass** das Beaufschlagungsteil (31) hineinragend in eine horizontale Projektion des Motors (9) (Projektionslinie (l₁, l₂)) angeordnet ist.

## Claims

1. A tool (1), for example a crimping tool, comprising an activating part, a movable tool leg (7) and a stationary tool leg (6), the activating part (31), furthermore, being movable in a motorized manner for moving the movable tool leg (7) relative to the stationary tool leg (6), whereby a longitudinal axis (L) of an electric motor (9) provided for driving the activating part extends below the activating part when the motor is oriented horizontally, whereby the activating part is arranged to be rotatable, **characterized in that** a handle region (2) of the tool (1) extends above the electric motor (9) and independently thereof, and that for driving the activating part, the electric motor (9) acts via a worm (17) on a worm wheel (15), a longitudinal axis of the worm (17) being disposed to coincide with the longitudinal axis (L) of the electric motor (9).

2. A tool, for example a crimping tool according to one of the preceding claims, **characterized in that** a grip-through opening (4) is formed between the handle region (2) and the electric motor (9).

3. A tool, for example a crimping tool according to claim 2, **characterized in that** the grip-through opening (4) is open on one side.

4. A tool, for example a crimping tool according to one of the preceding claims, **characterized in that** the movable tool leg (7) is pivoted at a pivot joint (8) formed on the stationary tool leg (6) so as to be pivotable relative to the stationary tool leg (6).

5. A tool, for example a crimping tool according to one of the preceding claims, **characterized in that** the motor (9) is mounted on a part that is fixedly connected to the stationary tool leg (6).

6. A tool, for example a crimping tool according to one of the preceding claims, **characterized in that** the motor (9) acts on the movable tool leg (7) on the jaw side of the pivot joint (8).

7. A tool, for example a crimping tool according to one of the preceding claims, **characterized in that** the tool legs (6, 7) extend in a common handle portion.

8. A tool, for example a crimping tool according to one of the claims 4 to 7, **characterized in that** the pivot joint (8) is located in the handle region (2).

9. A tool, for example a crimping tool according to one of the preceding claims, **characterized in that** activating is carried out by means of a toggle lever drive (11).

10. A tool, for example a crimping tool according to claim 9, **characterized in that** in a side view of the tool (1), the toggle lever drive (11) is disposed between the motor shaft (16) and the movable tool leg (7).

11. A tool, for example a crimping tool according to one of the claims 9 or 10, **characterized in that** the motor (9) acts on a gear wheel (15) that forms, at the same time, a lever of the toggle mechanism.

12. A tool, for example a crimping tool according to one of the preceding claims, **characterized in that** a tool cheek piece, preferably the whole movable tool leg (7), is composed of plate parts (7a, 7b), and the force transmission of the motor (9) to the movable tool leg (7) takes place on a web connecting the plates.

13. A tool, for example a crimping tool according to one of the claims 4 to 12, **characterized in that** with regard to a horizontal orientation of the tool legs (6, 7), the motor (9) is disposed below the tool legs (6, 7) and extends at least partially on the jaw side relative to the pivot joint (8).

14. A tool, for example a crimping tool according to one of the preceding claims, **characterized in that** a grip-through opening (4) is formed between the motor (9) and the tool legs (6, 7) for holding the tool by hand.

15. A tool, for example a crimping tool according to one of the preceding claims, **characterized in that** the activating part (31) is disposed to protrude into a horizontal projection of the motor (9) (projection lines (l₁, l₂)).

## Revendications

1. Pince (1), par exemple pince à sertir, comprenant une partie de sollicitation, une branche de pince mobile (7) et une branche de pince fixe (6), la partie de sollicitation pouvant être déplacée de façon motorisée pour déplacer la branche de pince mobile (7) par rapport à la branche de pince fixe (6), un axe longitudinal (L) d'un moteur électrique (9) prévu pour entraîner la partie de sollicitation lorsque le moteur est orienté horizontalement, s'étendant en dessous de la partie de sollicitation et partie de sollicitation étant agencée de façon à pouvoir tourner, **caractérisée en ce qu'**une portion de prise (2) de la pince (1) s'étend au-dessus et indépendamment du moteur électrique (9) et que pour entraîner la partie de sollicitation, le moteur électrique (9) agit sur une roue hélicoïdale (15) par le biais d'une vis sans fin (17), un axe longitudinal de la vis sans fin (17) étant agencé de façon à coïncider avec l'axe longitudinal (L) du moteur électrique (9).

2. Pince, par exemple pince à sertir, selon la revendication précédente, **caractérisée en ce qu'**une ouverture de passage (4) est réalisée entre la portion de prise (2) et le moteur électrique (9).

3. Pince, par exemple pince à sertir, selon la revendication 2, **caractérisée en ce que** l'ouverture de passage (4) est ouverte d'un côté.

4. Pince, par exemple pince à sertir, selon l'une des revendications précédentes, **caractérisée en ce que** la branche de pince mobile (7) est articulée de façon basculante par rapport à la branche de pince fixe (6) dans une articulation (8) réalisée sur la branche de pince fixe (6).

5. Pince, par exemple pince à sertir, selon l'une des revendications précédentes, **caractérisée en ce que** le moteur (9) est installé sur une pièce reliée de façon fixe avec la branche de pince fixe (6).

6. Pince, par exemple pince à sertir, selon l'une des revendications précédentes, **caractérisée en ce que** le moteur (9) sollicite la branche de pince mobile (7) du côté du cliquet de l'articulation (8).

7. Pince, par exemple pince à sertir, selon l'une des revendications précédentes, **caractérisée en ce que** les branches de pince (6, 7) s'étendent dans une section de prise commune.

8. Pince, par exemple pince à sertir, selon l'une des revendications 4 à 7, **caractérisée en ce que** l'articulation (8) se trouve dans la portion de prise (2).

9. Pince, par exemple pince à sertir, selon l'une des revendications précédentes, **caractérisée en ce que** la sollicitation s'effectue au moyen d'un mécanisme de levier à genouillère (11).

10. Pince, par exemple pince à sertir, selon la revendication 9, **caractérisée en ce que** le mécanisme de levier à genouillère (11), dans une vue de côté de la pince (1), est agencé entre l'arbre du moteur (16) et la branche de pince mobile (7).

11. Pince, par exemple pince à sertir, selon l'une des revendications 9 ou 10, **caractérisée en ce que** le moteur (9) agit sur une roue dentée (15) qui forme en même temps un levier du levier à genouillère.

12. Pince, par exemple pince à sertir, selon l'une des revendications précédentes, **caractérisée en ce qu'**une mâchoire de pince, de préférence la branche de pince mobile (7) tout entière, est constituée de parties de plaques (7a, 7b) et la transmission de force du moteur (9) sur la branche de pince mobile (7) s'effectue sur une âme reliant les plaques.

13. Pince, par exemple pince à sertir, selon l'une des revendications 4 à 12, **caractérisée en ce que** le moteur (9) est agencé en dessous des branches de pince (6, 7) par référence à une orientation horizontale des branches de pince (6, 7) et s'étend au moins partiellement du côté du cliquet par rapport à l'articulation (8).

14. Pince, par exemple pince à sertir, selon l'une des revendications précédentes, **caractérisée en ce qu'**un espace de passage (4) est réalisé entre le moteur (9) et les branches de pince (6, 7) pour la saisie par la main.

15. Pince, par exemple pince à sertir, selon l'une des revendications précédentes, **caractérisée en ce que** la partie de sollicitation (31) est agencée de façon à dépasser dans une projection horizontale du moteur (9) (ligne de projection (l₁,l₂)).
